# EUROPEAN PATENT SPECIFICATION

(11) **EP 2 616 210 B1**
(45) Date of publication and mention of the grant of the patent: **06.08.2014**
(21) Application number: 11767474.7
(22) Date of filing: 12.09.2011
(51) Int. Cl.: B23P 19/08, B25B 27/00

(54) **A RUBBER SEAL REMOVAL MACHINE**
DICHTUNGSGUMMIENTFERNUNGSMASCHINE
MACHINE DE RETRAIT D'UN JOINT EN CAOUTCHOUC

(30) Priority: 15.09.2010 TR 201007571
(43) Date of publication of application: 24.07.2013
(73) Proprietor: Aygaz Anonim Sirketi, Istanbul (TR)
(72) Inventor: ISBILEN, Emrah, Istanbul (TR); YAMAN, Burak, Istanbul (TR); UGUR, Rahmi, Izmit (TR)
(74) Representative: Cayli, Hülya
(86) International application number: PCT/IB2011/053983
(87) International publication number: WO 2012/035486

(56) References cited:
- EP-A2- 2 199 010
- GB-A- 2 153 452
- US-A- 4 612 953
- US-A- 5 490 321
- US-A- 5 974 646
- US-A1- 2004 016 096

## Description

### Field of the Invention

The present invention relates to a rubber removal machine that enables to remove the gland rubber, which is located on the mini-valve in LPG gas cylinders and provides sealing when the regulator is installed, from the valve in a short period of time , according to the preamble of claim 1. Such a rubber removal machine is known from document EP 2 199 010 A2.

### Background of the Invention

Sealing between the regulator and the valve installed on the LPG (liquefied petroleum gas) cylinders used today is provided by gland rubbers. Gas leakage and as a result of that, fires arise due to wearing out and tearing of the gland rubbers in time. Even if the gland rubbers used in the valves are controlled with one hundred percent rate in gas cylinder filling facilities, it is impossible to achieve zero error. For that reason, gland rubbers are required to be replaced at each filling of the cylinders. Replacement of the said gland rubber is performed manually at the present time and therefore it takes a long time and increases the cost.

The United States patent document no. US5974646 discloses a tool, which is useful for removing a leakage preventer ring disposed in a groove on the head of a cylinder, and which is obtained by connection of a lever for providing space with a lever that has a claw on the end thereof for engaging the ring, in a scissor-like fashion. The ring is removed as a result of the joined motion of the said two levers due to their connection.

The United States patent document no. US2004016096 discloses an apparatus used for removing the sealing pieces located in a valve at a cylinder head of an engine. The said sealing piece removal apparatus comprises a lever and at least a pair of gripping members for frictionally gripping the sealing piece.

The United States patent document no. US4612953 discloses a fluid coupling, a tool for removing a coupling seal from the said fluid coupling and utilization of the said tool in this coupling. Seal removal tool is inserted into the open end of the coupling and the knife edge of the tool enables the seal to be removed.

### Summary of the Invention

The objective of the present invention is to provide a rubber removal machine which enables automatic removal of the gland rubber located in the cylinder valve.

Another objective of the present invention is to provide a rubber removal machine which enables use of gas cylinders to become more reliable.

### Detailed Description of the Invention

In accordance with the invention, the objective is achieved in a gland rubber removal machine according to claim 1. Advantageous modifications of the invention are objects of the dependent claims.

A rubber removal machine developed to fulfill the objectives of the present invention is illustrated in the accompanying figures, wherein;

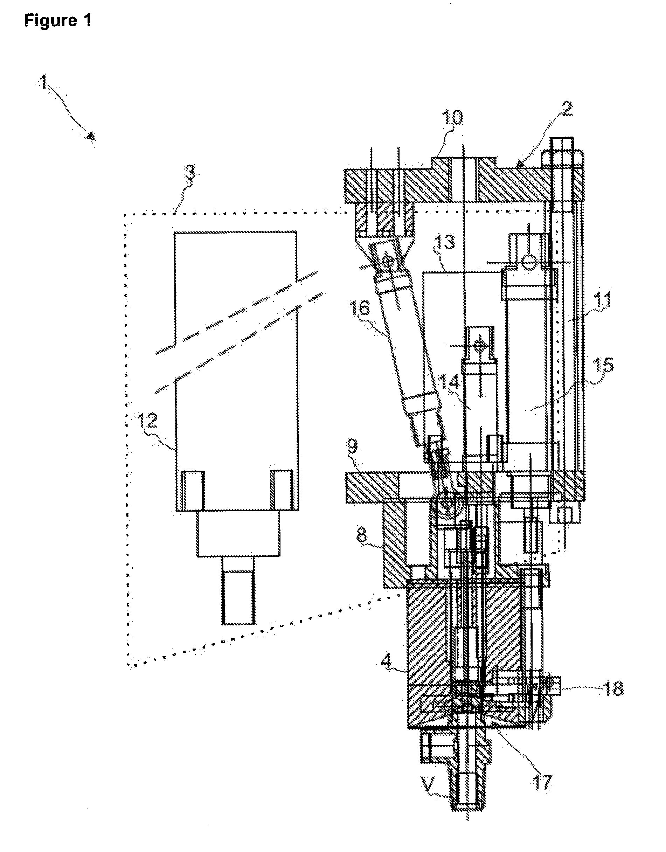

Figure 1 is the partial sectional view of the rubber removal machine.

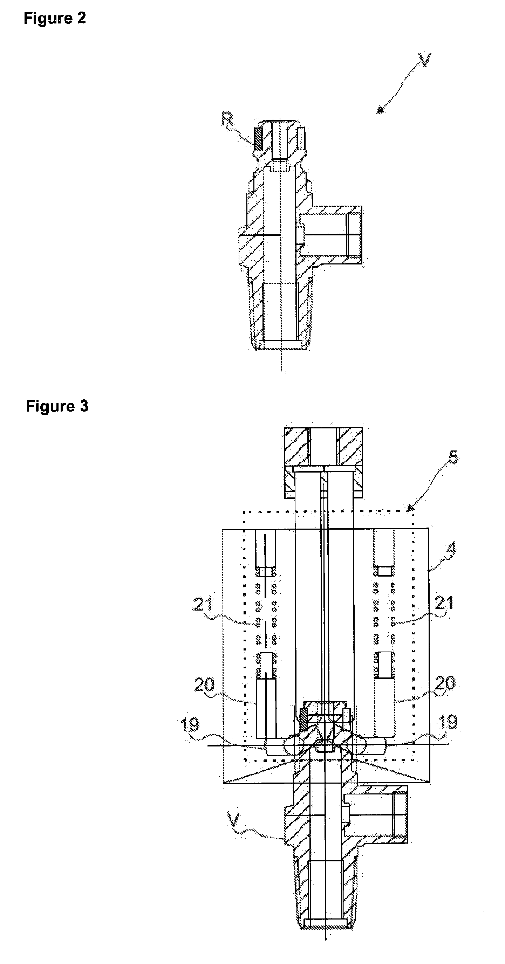

Figure 2 is the partial sectional view of the valve whose gland rubber will be removed.
Figure 3 is the partial sectional view of the position where the locking group locks the valve.

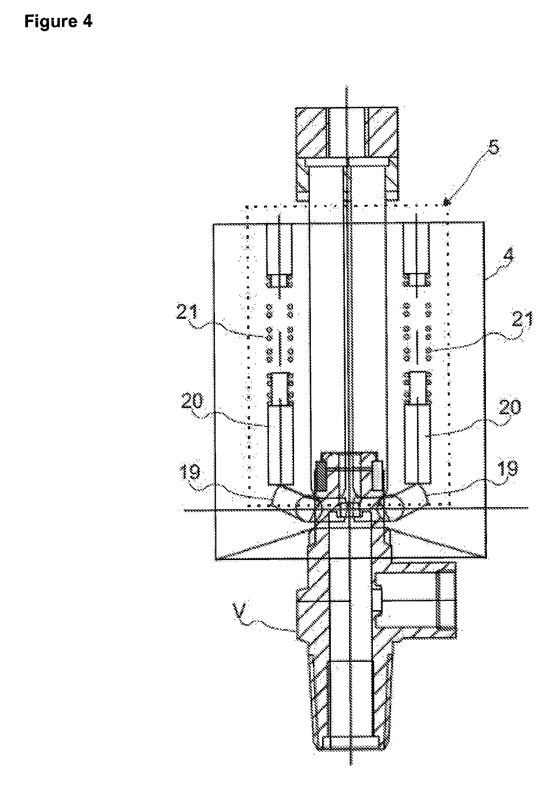

Figure 4 is the partial sectional view of the position where the locking group releases the valve.

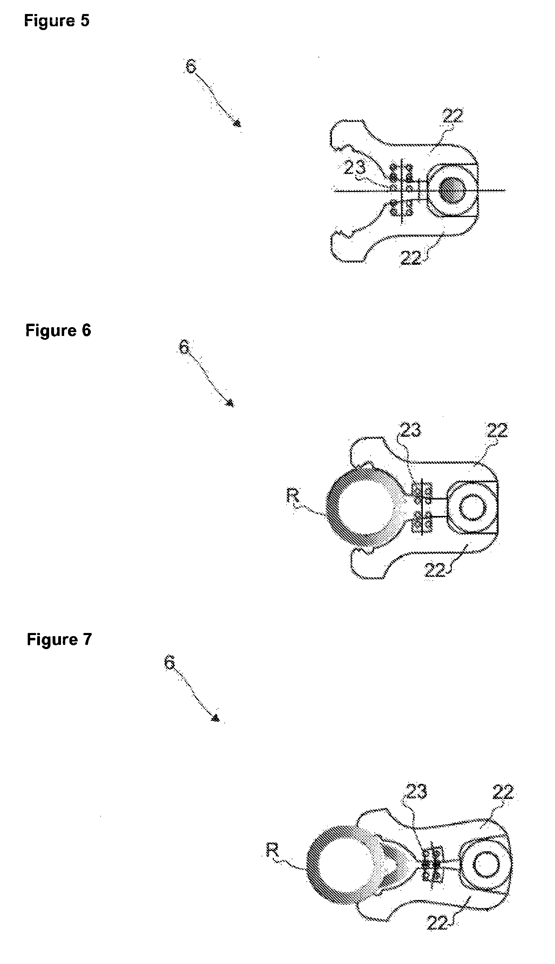

Figure 5 is the top view of the rubber gripping group.
Figure 6 is the top view of the position where the rubber gripping group grips the rubber.
Figure 7 is the top view of the position where the rubber gripping group compresses the rubber.

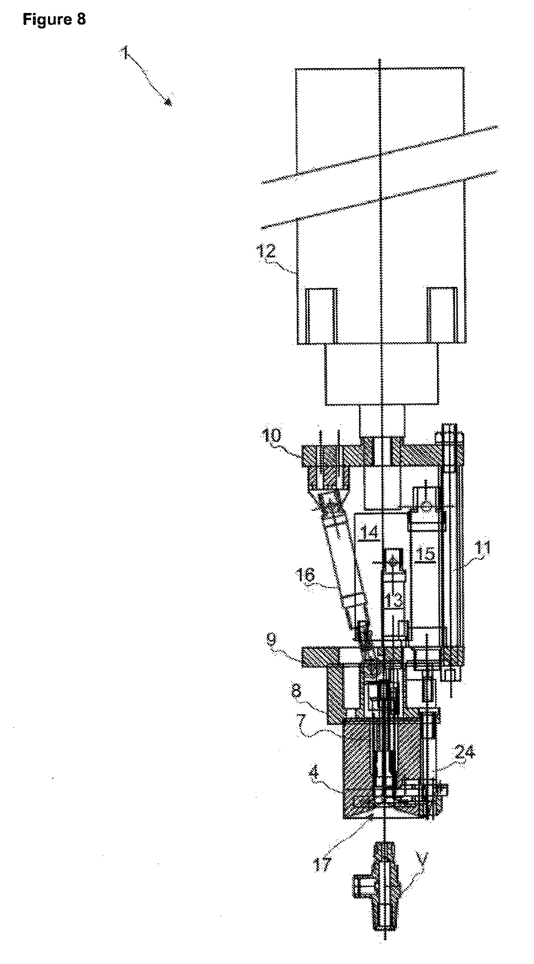

Figure 8 is the partial sectional view of the position where the rubber removal machine does not compress the valve.

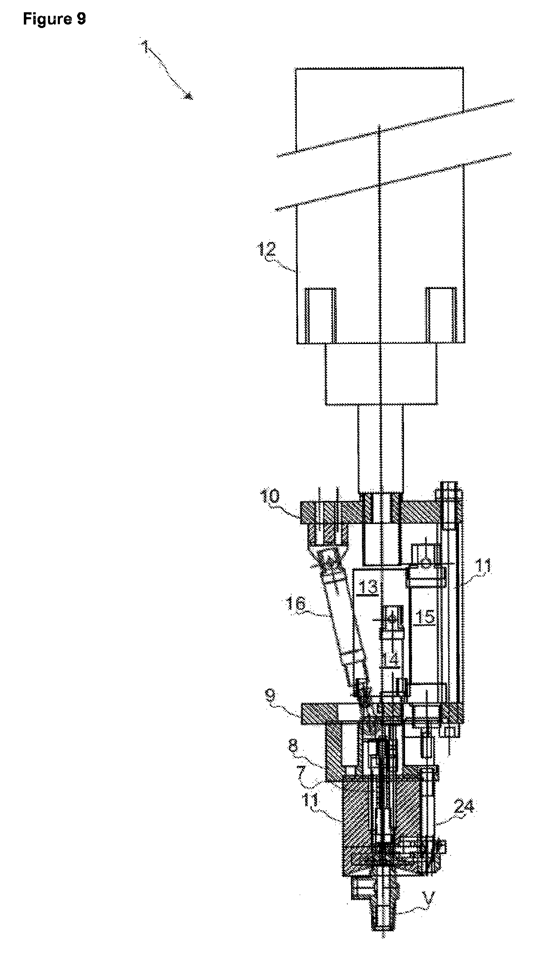

Figure 9 is the partial sectional view of the position where the rubber removal machine compresses the valve.

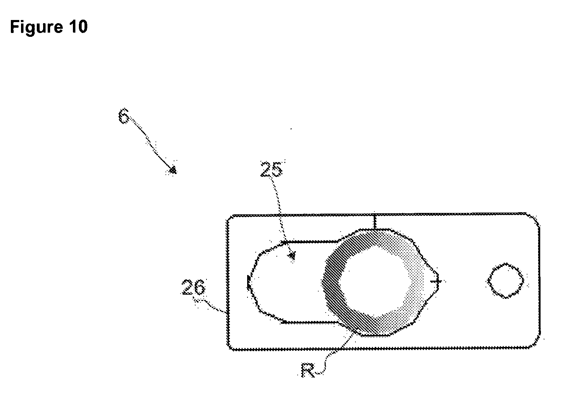

Figure 10 is the top view of an embodiment of the rubber gripping group.

The components in the figures are each given a reference number and the numbers refer to the following:
1- Rubber removal machine
2- Body
3- Actuator group
4- Head
5- Locking group
6- Rubber gripping group
7- Rubber removal member
8- Head holder
9- Lower coupling flange
10-Upper coupling flange
11- Connection member
12- First roller
13- Second roller
14- Third roller
15- Fourth roller
16- Fifth roller
17- Valve seat
18- Rubber gripping group housing
19- Locking latch
20- Thrust shaft
21- Spring
22- Jaw
23- Spring
24- Cam
25- Channel
26- Plate
V: valve
R: gland rubber

The inventive rubber removal machine (1) comprises
a body (2),
at least one actuator group ((3) which is disposed on the body (2) and which provides the necessary drive for removal of the gland rubber (R) from the valve (V).
at least one head (4) which is disposed on the body (2) and which performs removal of the rubber (R) by connecting to the actuator group (3),
at least one locking group (5) which is disposed on the head (4) and which enables that the gas cylinder having a valve (V) whose gland rubber (R) will be removed is fixed during the process,
at least one rubber gripping group (6) which is disposed on the head (4) and which enables to grip the gland rubber (R) on the valve (V),
at least one rubber removal member (7) which enables to remove the gland rubber (R) gripped by the rubber gripping group (6) from the valve (V), and
at least one control unit (not shown in the figures) which regulates operation of the actuator group (3) in a controlled manner.

The body (2) comprises
at least one head holder (8) on which the head (4) is disposed,
at least one lower coupling flange (9) which is located on the upper surface of the head holder (8), and which enables the actuator group (3) to contact the head (4), at least one actuator group upper coupling flange (10) which enables that the part of the actuator group (3) where there is no head (4) is also fixed, and
at least one connection member (11) which enables the lower coupling flange (9) and the upper coupling flange (10) to connect to each other and stand firmly and fixedly.

The actuator group (3) comprises
at least one first roller (12) which is placed on the upper coupling flange (10) and which can move upwards and downwards along the axis of the gas cylinder and as a result of this motion, enables the head (4) to be engaged to the valve (V) on the gas cylinder or to be separated from the valve (V),
at least one second roller (13) which is connected to the lower coupling flange (9) and which, upon its movement, enables the locking group (5) to lock or release the valve (V),
at least one third roller (14) which is connected to the lower coupling flange (9) and which, upon its movement, enables the rubber gripping group (6) to grip the gland rubber (R) located on the valve (V),
at least one fourth roller (15) which is connected to the lower coupling flange (10) and which, upon its movement, enables the rubber removal member (7) to remove the gland rubber (R) located on the valve (V).

The actuator group (3) also comprises at least one fifth roller (16) which is placed on the upper coupling flange (10), and which prevents the gland rubber (R) removed from the valve (V) from remaining within the head (4) and pushes the said rubber (R) outwardly from the head (4).

The head (4) is disposed on the head holder (8) located on the body (2). The head (4) comprises thereon at least one valve seat (17) that enables the valve (V) to be coupled to the head (4) for removing the gland rubber (R) from the valve (V) and at least one rubber gripping group housing (18) into which is placed the rubber gripping group (6) that enables to grip the gland rubber (R) during the removal process.

The locking group (5) comprises
at least one locking latch (19) which exerts pressure on the valve (V) in order to fix the valve (V) that is placed into the valve seat (17),
at least one thrust shaft (20) which, according to the motion of the second roller (13), passes the locking latch (19) from the position where it does not exert pressure on the valve (V) to the position where it exerts pressure on the valve (V), at least one spring (21) which enables the locking latch (19), which is in the position where it exerts pressure on the valve (V), to return to the position where it does not exert pressure on the valve (V) upon canceling of the force acting on the thrust shaft (20).

In the preferred embodiment of the invention, the locking latch (19) comprises at least two pieces which are at a position where they are angled to each other. While one of the said pieces contacts the valve (V), the thrust shaft (20) sits on the other piece, and by exerting pressure on the locking latch (19) or by withdrawing the pressure it exerts, enables the locking latch (19) to make a rotational movement.

In the preferred embodiment of the invention, the locking group (5) comprises two locking latches (19), two thrust shafts (20) and two springs (21).

The rubber gripping group (6) is placed into the rubber gripping group housing (18) located on the head (4). The rubber gripping group (6) comprises at least two jaws (22) which are connected so as to make a rotational movement relative to each other, at least one spring (23) placed in between the jaws (22), and at least one cam (24) which can enter and exit the connection point of the jaws (22) whereby enabling the jaws (22) to move and approach each other or move away from each other. The cam (24) is moved by the third roller (14). By means of the said movement, the jaws (22) grip the rubber (R) that will be removed.

In the preferred embodiment of the invention, the cam (24) has a conical shape.

In another embodiment of the invention, the rubber gripping group (6) is in the form of a plate (26) comprising thereon at least one channel (25) which does not have a fixed diameter. The channel (25) comprises a section with a large diameter on which the rubber (R) is disposed and a section with a small diameter which enables the shape of the rubber to become oval as a result of the movement provided to the plate (26).

After the rubber (R) is gripped by the jaws (22); the rubber removal member (7) is driven by the fourth roller (15) and engages into the rubber (R), and when the drive is cancelled, rises upwards along with the rubber (R). This way, the gland rubber (R) on the valve (V) is ensured to be separated from the valve (V).

In the inventive rubber removal machine (1), as the control unit begins to operate the first roller (12), the head (4) moves downwards along the axis of the gas cylinder and sits on the valve (V). After the head (4) is seated on the valve (V), the control unit activates the second roller (13) and the second roller (13) begins to push the thrust shaft (20) downwards. Upon pushing downwards of the thrust shaft (20), the locking latch (19) rotates in a predetermined angle and locks the valve (V). This way, the valve (V) is ensured to remain fixed throughout the process. After the valve (V) is fixed, the control unit activates the third roller (14) and the third roller (14) enables the cam (24) to move downwards along the axis of the head (4). As the cam (24) moves, the jaws (22) also start to move and enable to compress the gland rubber (R). The gland rubber (R) compressed by the jaws (22) acquires a hollow oval form. After the gland rubber (R) acquires an oval form, the control unit activates the fourth roller (15) and enables the fourth roller (15) to exert pressure on the rubber removal member (7). The rubber removal member (7), which is under a pressure, moves downwards along the axis of the head (4) and enters into the hollow part provided in the oval form acquired by the gland rubber (R). After the rubber removal member (7) enters into the hollow part on the gland rubber (R) which has acquired an oval form, the control unit starts to move the second roller (13) upwards. Upon upward movement of the second roller (13), the force acting on the thrust shaft (20) ceases to exist and by means of the spring (21), the thrust shaft (20) rises from the locking latch (19); in other words, no force is exerted on the locking latch (19). The locking latch (19), after getting released from the force exerted by the thrust shaft (20), makes a rotational movement at a certain ratio, whereby returns to its position where it does not compress the valve (V). Then the control unit moves the third roller (14) upwards. As the force acting on the cam (24) ceases to exist upon upward movement of the third roller (14), the cam (24) also starts to move upwards. As a result of the upward movement of the cam (24), the jaws (22) are released and try to return to their initial position by means of the force of the spring (23). Subsequently, the control unit moves the first roller (12) upwards. This way, the head (4) is also enabled to ascend. Thus the gland rubber (R) is separated from the valve (V). Upon ascending of the head (4), the control unit activates the fourth roller (15) and the fourth roller (15) starts to ascend. As the fourth roller (15) ascends, the rubber removal member (7) also ascends. This way, the gland rubber (R) is released. However, the released gland rubber (R) maintains its permanent oval form that has resulted after the force. In this case, when the jaws (22) are returning to their places by means of the spring (23) force, the gland rubber is also pushed towards the axis of the head (4) and returns to its circular form. In order to prevent cases where the gland rubber (R) that arrives at the axis of the head (4) does not fall outwards from the inner part of the head (4), the control unit activates the fifth roller (16) and as the fifth roller (16) pushes the gland rubber (R) that is separated from the valve (V), the rubber (R) is thrown out of the head (4).

In the rubber removal machine (1) of the invention, movements of the rollers (12, 13, 14, 15, 16) forming the actuator group (3) are controlled by the control unit. This way, rubber removal operation is conveniently performed in a short period of time.

Within the framework of these basic concepts, it is possible to develop a wide variety of embodiments of the inventive rubber removal machine (1). The invention can not be limited to the examples described herein and it is essentially according to the claims.

## Claims

1. A rubber removal machine (1) comprising
a body (2),
at least one actuator group (3) which is disposed on the body (2) and which provides the necessary drive for removal of a gland rubber (R) from a valve (V) of a gas cylinder,
at least one head (4) which performs removal of the rubber (R) by connecting to the actuator group (3),
at least one locking group (5) which is disposed on the head (4) and which enables that the gas cylinder having the valve (V) whose gland rubber (R) will be removed is fixed during the process,
at least one rubber gripping group (6) which enables to grip the gland rubber (R) on the valve (V),
at least one rubber removal member (7) which enables to remove the gland rubber (R) gripped by the rubber gripping group (6) from the valve (V), and
at least one control unit which regulates operation of the actuator group (3) in a controlled manner **characterized in that** the body (2) comprises
- at least one head holder (8) on which the head (4) is disposed,
- at least one lower coupling flange (9) which is located on the upper surface of the head holder (8), and which enables the actuator group (3) to contact with the head (4),
- at least one actuator group upper coupling flange (10) which enables that the part of the actuator group (3) where there is no head (4) is also fixed, and
- at least one connection member (11) which enables the lower coupling flange (9) and the upper coupling flange (10) to connect to each other and stand firmly and fixedly,
**in that** the actuator group (3) comprises
- at least one first roller (12) which Is placed on the upper coupling flange (10) and which can move upwards and downwards along the axis of the gas cylinder and as a result of this motion, enables the head (4) to be engaged to the valve (V) on the gas cylinder or to be separated from the valve (\/),
- at least one second roller (13) which is connected to the lower coupling flange (9) and which, upon its movement, enables the locking group (5) to lock or release the valve (V),
- at least one third roller (14) which is connected to the lower coupling flange (9) and which, upon its movement, enables the rubber gripping group (6) to grip the gland rubber (R) located on the valve (V),
- at least one fourth roller (15) which is connected to the lower coupling flange (10) and which, upon its movement, enables the rubber removal member (7) to remove the gland rubber (R) located on the valve (V)
**in that** the head (4) is disposed on the head holder (8) located on the body (2) and comprises
- at least one valve seat (17) that enables the valve (V) to be coupled to the head (4) for removing the gland rubber (R) from the valve (V).
- at least one rubber gripping group housing (18) into which is placed the rubber gripping group (6) that enables to grip the gland rubber (R) during the removal process
and **in that** the rubber gripping group (6) is placed into the rubber gripping group housing (18) located on the head (4), and comprises
- at least two Jaws (22) which are connected so as to make a rotational movement relative to each other,
- at least one spring (23) placed in between the jaws (22),
- at least one cam (24) which is moved by the third roller, which can enter into and exit from the connection point of the jaws (22) whereby enabling the jaws (22) to move and approach each other in order to enable the compressing of the gland rubber (R) and to acquire the compressed gland rubber (R) for having a hollow oval form or move away from each other.

2. A rubber removal machine (1) according to Claim 1, **characterized in that** the actuator group (3) comprises at least one fifth roller (16) which is placed on the upper coupling flange (10), and which prevents the gland rubber (R) removed from the valve (V) from remaining within the head (4) and pushes the said rubber (R) outwardly from the head (4).

3. A rubber removal machine (1) according to any of the preceding claims, **characterized in that** the locking group (5) comprises
- at least one locking latch (19) which exerts pressure on the valve (V) in order to fix the valve (V) that is placed into the valve seat (17),
- at least one thrust shaft (20) which, according to the motion of the second roller (13), passes the locking latch (19) from the position where it does not exert pressure on the valve (V) to the position where it exerts pressure on the valve (V),
- at least one spring (21) which enables the locking latch (19), which is in the position where it exerts pressure on the valve (V), to return to the position where It does not exert pressure on the valve (V) upon canceling the force acting on the thrust shaft (20).

4. A rubber removal machine (1) according to Claim 3, **characterized in that** the locking latch (19) comprises at least two pieces which are at a position where they are angled to each other.

5. A rubber removal machine (1) according to Claim 1, **characterized In that** the cam (24) has a conical shape.

6. A rubber removal machine (1) according to any of Claims 1 to 4, **characterized in that** the rubber gripping group (6) is in the form of a plate (26) comprising at least one channel (25) which does not have a fixed diameter.

7. A rubber removal machine (1) according to Claim 6, **characterized in that** the channel (25) comprises a section with a large diameter on which the rubber (R) is disposed and a section with a small diameter which enables the shape of the rubber to become oval as a result of the movement provided to the plate (26).

8. A rubber removal machine (1) according to any of Claims 1 to 7, **characterized in that** the control unit is in a structure so as to enable the head (4) to move downwards along the axis of the gas cylinder and sit on the valve (V) upon starting to operate the first roller (12).

9. A rubber removal machine (1) according to Claim 8, **characterized in that** the control unit is in a structure so as to activate the second roller (13) whereby enabling the thrust shaft (20) to move downwards after the head (4) sits on the valve (V).

10. A rubber removal machine (1) according to Claim 9, **characterized in that** the thrust shaft (20) is in a structure so as to rotate the locking latch (19) at a predetermined angle, whereby enabling the valve (V) to be locked and thus remain fixed throughout the process upon moving downwards.

11. A rubber removal machine (1) according to Claim 10, **characterized in that** the control unit is in a structure so as to activate the third roller (14) and enables the third roller (14) and the cam (24) to move downwards along the axis of the head (4) after the valve (V) is fixed,.

12. A rubber removal machine (1) according to Claim 11, **characterized in that** the cam (24) is in a structure so as to enable the jaws (22) to move as well and the gland rubber (R) to be compressed and to acquire a hollow oval form upon movement thereof.

13. A rubber removal machine (1) according to Claim 12, **characterized in that** the control unit is in a structure so as to activate the fourth roller (15) and enables the fourth roller (15) to exert pressure on the rubber removal member (7)after the gland rubber (R) acquires an oval form.

14. A rubber removal machine (1) according to Claim 13, **characterized in that** the rubber removal member (7) is in a structure so as to move downwards along the axis of the head (4) and enter into the hollow part provided in the oval form acquired by the gland rubber (R).

15. A rubber removal machine (1) according to Claim 14, **characterized in that** the control unit is in a structure so as to move the second roller (13) upwards after the rubber removal member (7) enters into the hollow part on the gland rubber (R) that has acquired an oval form.

16. A rubber removal machine (1) according to Claim 15, **characterized in that** the second roller (13) is in a structure so as to cancel the force acting on the thrust shaft (20), and by means of the spring (21), enable the thrust shaft (20) to rise from the locking latch (19) upon upward movement thereof.

17. A rubber removal machine (1) according to Claim 16, **characterized in that** the locking latch (19) is in a structure so as to make a rotational movement at a predetermined ratio, whereby returning to its position where it does not compress the valve (V) after getting released from the force exerted by the thrust shaft (20).

18. A rubber removal machine (1) according to Claim 17, **characterized in that** the control unit Is In a structure so as to move the third roller (14) upwards after the locking latch (19) returns to its position where it does not compress the valve.

19. A rubber removal machine (1) according to Claim 18, **characterized in that** the third roller (14) is in a structure so as to enable the cam (24), on which the force acting ceases to exist upon upward movement of the former, to move upwards as well.

20. A rubber removal machine (1) according to Claim 19, **characterized in that** the cam (24) is in a structure so as to enable the jaws (22) to be released and to try to return to their initial positions by means of the force of the spring (23) upon upward movement thereof.

21. A rubber removal machine (1) according to Claim 20, **characterized In that** the control unit is in a structure so as to move the first roller (12) upwards whereby enabling the head (4) to ascend as well and the gland rubber (R) to be separated from the valve (V) after the jaws (22) return to their initial positions,.

22. A rubber removal machine (1) according to Claim 21, **characterized in that** the control unit is in a structure so as to activate the fourth roller (15), whereby enabling the fourth roller (15) to ascend and thus the rubber removal member (7) to ascend as well and the gland rubber (R) to be released upon ascending of the head (4).

23. A rubber removal machine (1) according to Claim 22, **characterized in that** the control unit Is In a structure so as to activate the fifth roller (16) and enable the rubber (R) to be thrown out of the head (4) as the fifth roller (16) pushes the gland rubber (R) that is separated from the valve (V) in order to prevent cases where the gland rubber (R) that arrives at the axis of the head (4) does not fall outwards from the inner part of the head (4).

## Patentansprüche

1. Gummiabnahme- oder Entfernungsmaschine (1), umfassend
- einen Körper oder Rumpf (2);
- zumindest eine Aktivgruppe (3), welche an dem Körper (2) angeordnet ist und den erforderlichen Antrieb oder die erforderliche Kraft zum Entfernen eines Buchsengummis (R) von einem Ventil (V) eines Gaszylinders bereitstellt;
- zumindest einen Kopf (4), der das Entfernen des Gummis (R) bewirkt, durch Verbinden mit der Aktivgruppe (3);
- zumindest eine Halte- oder Verriegelungsgruppe (5), welche an dem Kopf (4) angeordnet ist, um den Gaszylinder während des Verfahrens oder Entfernens zu halten, welcher Gaszylinder das Ventil (V) besitzt, dessen Buchsengummi (R) zu entfernen ist;
- zumindest eine Greifergruppe (6) für das Gummi, angepasst, das Buchsengummi (R) am Ventil (V) zu ergreifen;
- zumindest ein Gummi-Abnahmeglied (7), um das Buchsengummi (R), welches von der Greifergruppe (6) ergriffen ist, von dem Ventil (V) abzunehmen oder zu entfernen; und
- zumindest eine Steuereinheit, welche die Betriebsweise der Aktivgruppe (3) steuert, in einer gesteuerten oder geregelten Weise;
- **dadurch gekennzeichnet, dass** der Rumpf oder Körper (2) aufweist
- zumindest einen Kopfhalter (8), an dem der Kopf (4) angeordnet ist;
- zumindest einen unteren Kopplungsflansch (9), der an der unteren Oberfläche des Kopfhalters (8) gelegen ist und es der Aktivgruppe (3) ermöglicht, mit dem Kopf (4) in Berührung zu kommen;
- zumindest einen oberen Kopplungsflansch (10) für die Aktivgruppe, welcher Flansch es einem Abschnitt der Aktivgruppe (3) ermöglicht, an der kein Kopf (4) angeordnet ist, auch fixiert zu sein;
- zumindest ein Verbindungsglied (11), welches es dem unteren Kopplungsflansch (9) und dem oberen Kopplungsflansch (10) ermöglicht, miteinander verbunden zu sein und relativ zueinander fest und stabil zu stehen;
- wobei die Aktivgruppe (3) aufweist
- zumindest eine erste Rolle (12), welche an dem oberen Kopplungsflansch (10) platziert ist und welche sich aufwärts und abwärts längs einer Achse des Gaszylinders bewegen kann, und als Folge dieser Bewegung es dem Kopf (4) ermöglicht, am Ventil (V) des Gaszylinders anzugreifen oder von dem Ventil (V) getrennt zu werden;
- zumindest eine zweite Rolle (13), welche mit dem unteren Kopplungsflansch (9) verbunden ist und welche bei ihrer Bewegung es der Verriegelungs- oder Haltegruppe (5) ermöglicht, das Ventil (V) zu halten oder loszulassen;
- zumindest eine dritte Rolle (14), welche mit dem unteren Kopplungsflansch (9) verbunden ist und welche es bei ihrer Bewegung ermöglicht, der Greifgruppe (6) für das Gummi das Buchsengummi (R) zu erfassen, welches an dem Ventil (V) sitzt;
- zumindest eine vierte Rolle (15), welche mit dem unteren Kopplungsflansch (10) verbunden ist und welche bei seiner Bewegung es dem Gummi-Entfernungsglied (7) ermöglicht, das Buchsengummi (R) zu entfernen oder abzunehmen, welches an dem Ventil (V) sitzt;
- wobei der Kopf (4) an dem Kopfhalter (8) angeordnet ist, der an dem Körper oder Rumpf (2) angeordnet ist und umfasst
- zumindest einen Ventilsitz (17), welches es dem Ventil (V) ermöglicht, mit dem Kopf (4) zum Entfernen oder Abnehmen des Buchsengummis (R) von dem Ventil (V) gekoppelt zu werden;
- zumindest ein Gehäuse (18) für die Greifgruppe für das Gummi, in welchem Gehäuse die Greifgruppe (6) des Gummis aufgenommen ist, welche Gruppe (6) es ermöglicht, den Buchsengummi (R) während des Abnehmprozesses zu ergreifen;
- und wobei die Greifgruppe (6) für das Gummi in dem Gehäuse (18) für die Gummi-Greifgruppe platziert ist, welches Gehäuse an dem Kopf (4) angeordnet ist und aufweist
- zumindest zwei Greifer oder Backen (22), welche miteinander verbunden sind, um eine Drehbewegung relativ zueinander auszuführen;
- zumindest eine Feder (23), welche zwischen den beiden Backen oder Greifern (22) angeordnet ist;
- zumindest einen Nocken oder Mitnehmer (24), der von der dritten Rolle bewegbar ist, welche Rolle in den Verbindungspunkt der Backen (22) eintreten kann und daraus heraustreten kann, wodurch die Backen oder Greifer (22) sich bewegen und sich aufeinander zubewegen, um ein Greifen oder Komprimieren des Buchsengummis (R) zu ermöglichen und das zusammengedrückte Buchsengummi (R) in eine hohle ovale Form zu bringen oder sich auseinander zu bewegen.

2. Maschine zur Abnahme von Gummi nach Anspruch 1, **dadurch gekennzeichnet, dass** die Aktivgruppe (3) zumindest eine fünfte Rolle (16) aufweist, welche an dem oberen Kopplungsflansch (10) platziert ist und welche verhindert, dass der Buchsengummi (R), der von dem Ventil (V) entnommen wird, an dem Kopf (4) verbleibt und das Gummi (R) aus dem Kopf oder von dem Kopf weg (4) drückt oder schiebt.

3. Maschine zur Abnahme von Gummi nach einem der vorigen Ansprüche, **dadurch gekennzeichnet, dass** die Halte- oder Verriegelungsgruppe (5) aufweist
- zumindest einen Verriegelungsverschluss (19), welcher Druck auf das Ventil (V) ausübt, um das Ventil (V), welches in dem Ventilsitz (17) platziert ist, zu fixieren oder zu halten;
- zumindest einen Stoß- oder Schubschaft (20), welcher entsprechend der Bewegung der zweiten Rolle (13) den Verriegelungsverschluss (19) passiert, und zwar von der Position, bei der er keinen Druck auf das Ventil (V) ausübt, bis zur Position, bei der er Druck auf das Ventil (V) ausübt;
- zumindest eine Feder (21), welche es dem Verriegelungsverschluss (19) ermöglicht, in seiner Lage, bei der er Druck auf das Ventil (V) ausübt, in die Position oder Lage zurückzukehren, bei der er keinen Druck auf das Ventil (V) ausübt, unter Wegnahme der Kraft, die auf den Stoß- oder Schubschaft (20) einwirkt.

4. Maschine nach Anspruch 3, **dadurch gekennzeichnet, dass** der Verriegelungsverschluss (19) zumindest zwei Stücke aufweist, welche in einer Position sind, bei der sie in einem Winkel zueinander stehen.

5. Maschine nach Anspruch 1, **dadurch gekennzeichnet, dass** die Nocke oder der Mitnehmer (24) eine konische Form besitzt.

6. Maschine nach einem der Ansprüchen 1 bis 4, **dadurch gekennzeichnet, dass** die Greifgruppe (6) für das Gummi in der Form einer Platte (26) ausgebildet ist, mit zumindest einem Kanal (25), der keinen festen Durchmesser besitzt.

7. Maschine nach Anspruch 6, **dadurch gekennzeichnet, dass** der Kanal (25) einen Abschnitt mit einem größeren Durchmesser aufweist, an welchem das Gummi (R) anliegt, und einen Abschnitt mit einem kleineren Durchmesser aufweist, welcher es der Form des Gummis ermöglicht, oval zu werden, und zwar als Folge der Bewegung, die der Platte (26) erteilt wird.

8. Maschine nach einem der Ansprüche 1 bis 7, **dadurch gekennzeichnet, dass** die Steuereinheit in einer Form ausgebildet ist, den Kopf (4) abwärts längs einer Achse des Gaszylinders zu bewegen und auf dem Ventil (V) aufzusitzen, bei Beginn des Betriebs der ersten Rolle (12).

9. Maschine nach Anspruch 8, **dadurch gekennzeichnet, dass** die Steuereinheit in einer Form ausgebildet ist, die zweite Rolle (13) zu aktivieren, wobei der Stoß- und Schubschaft (20) abwärts bewegbar ist, nachdem der Kopf (4) auf dem Ventil (V) aufsitzt.

10. Maschine nach Anspruch 9, **dadurch gekennzeichnet, dass** der Schub- oder Stoßschaft (20) in einer Form ausgebildet ist, den Verriegelungsverschluss (19) herumzudrehen, in einem vorgegebenen Winkel, wobei es dem Ventil (V) ermöglicht wird, verriegelt zu werden und so fest während des Prozesses verbleibt, bei der Abwärtsbewegung.

11. Maschine nach Anspruch 10, **dadurch gekennzeichnet, dass** die Steuereinheit eine Form aufweist, bei der die dritte Rolle (14) aktiviert wird und es der dritten Rolle (14) und dem Mitnehmer oder der Nocke (24) ermöglicht wird, abwärts längs der Achse des Kopfes (4) bewegt zu werden, nachdem das Ventil (V) fixiert ist.

12. Maschine nach Anspruch 11, **dadurch gekennzeichnet, dass** die Nocke oder der Mitnehmer (24) in einer Form ausgebildet ist, die Greifer, Klammern oder Backen (22) zur Bewegung zu aktivieren und das Buchsengummi (R) zu komprimieren, wodurch es eine hohle ovale Form bei seiner Bewegung erhält.

13. Maschine nach Anspruch 12, **dadurch gekennzeichnet, dass** die Steuereinheit in einer Form ausgebildet ist, die vierte Rolle (15) zu aktivieren und die vierte Rolle (15) eine Kraft auf das den Gummi abnehmenden Teil (7) als Gummi-Abnahmeglied auszuüben, nachdem der Buchsengummi (R) eine ovale Form angenommen hat.

14. Maschine nach Anspruch 13, **dadurch gekennzeichnet, dass** der Teil (7) für die Abnahme des Gummis in einer Form ausgebildet ist, abwärts längs der Achse des Kopfes (4) bewegt zu werden und in den hohlen Abschnitt, der von der ovalen Form, die das Buchsengummi (R) angenommen hat, gebildet wird, eintritt.

15. Maschine nach Anspruch 14, **dadurch gekennzeichnet, dass** sich die Steuereinheit in einer Form ausbildet, die zweite Rolle (13) aufwärts zu bewegen, nachdem sich das für die Abnahme des Gummis vorgesehene Bauteil (7) in den hohlen Abschnitt am Buchsengummi (R) bewegt hat, der die ovale Form angenommen hat.

16. Maschine nach Anspruch 15, **dadurch gekennzeichnet, dass** die zweite Rolle (13) ausgebildet ist, die Kraft zu reduzieren, die auf den Stoß- oder Schubschaft (20) wirkt, und über die Feder (21) der Schaft (20) sich von dem Verriegelungsverschluss (19) abhebt oder anhebt, bei dessen Aufwärtsbewegung.

17. Maschine nach Anspruch 16, **dadurch gekennzeichnet, dass** der Verriegelungsverschluss (19) in einer Form gestaltet ist, eine Drehbewegung um ein vorbestimmtes Verhältnis auszuführen, wobei er in eine Position zurückgeführt wird, bei der er das Ventil (V) nicht belastet oder komprimiert, nachdem er von der Kraft des Schaftes (20) gelöst worden ist.

18. Maschine nach Anspruch 17, **dadurch gekennzeichnet, dass** die Steuereinheit eine Form aufweist, die dritte Rolle (14) aufwärts zu bewegen, nachdem der Verriegelungsverschluss (19) seine Position zurückerhalten hat, bei der er das Ventil nicht belastet oder komprimiert.

19. Maschine nach Anspruch 18, **dadurch gekennzeichnet, dass** die dritte Rolle (14) in einer Form ausgebildet ist, den Nocken oder Mitnehmer (24) auch aufwärts zu bewegen, wenn die Kraft auf ihn nachlässt, bei seiner Aufwärtsbewegung.

20. Maschine nach Anspruch 19, **dadurch gekennzeichnet, dass** der Nocken oder Mitnehmer (24) ausgebildet ist, die Backen oder Greifer (22) zu lösen und zu versuchen, sie in ihre anfängliche Positionen zurückzuführen, über die Kraft der Feder (23), bei deren Aufwärtsbewegung.

21. Maschine nach Anspruch 20, **dadurch gekennzeichnet, dass** die Steuereinheit eine Form aufweist, die erste Rolle (12) aufwärts zu bewegen, wodurch es dem Kopf (4) ermöglicht wird, ebenfalls anzusteigen und das Buchsengummi (R) von dem Ventil (V) zu trennen, nachdem die Greifer oder Backen (22) in ihre anfänglichen Positionen zurückgekehrt sind.

22. Maschine nach Anspruch 21, **dadurch gekennzeichnet, dass** die Steuereinheit eine Form aufweist, die vierte Rolle (15) so zu aktivieren, dass die vierte Rolle oder Walze (15) ansteigt und so der für das Entfernen des Gummis maßgebliche Teil (17) ebenfalls ansteigt oder sich aufwärts bewegt und das Buchsengummi (R) durch Ansteigen des Kopfes (4) gelöst wird.

23. Maschine nach Anspruch 22, **dadurch gekennzeichnet, dass** die Steuereinheit eine Form aufweist, die fünfte Rolle (16) zu aktivieren und den Gummi (R) aus dem Kopf (4) auszuwerfen, wenn die fünfte Rolle (16) den Buchsengummi (R), der von dem Ventil (V) getrennt wurde, drückt oder schiebt, um die Fälle zu verhindern oder zu vermeiden, bei denen der Buchsengummi (R), der an der Achse des Kopfes (4) ankommt, nicht außerhalb des inneren Abschnitts des Kopfes (4) fällt.

## Revendications

1. Machine de retrait de joint en caoutchouc (1), comprenant :
un corps (2),
au moins un groupe d'actionnement (3) qui est disposé sur le corps (2) et qui fournit l'entraînement nécessaire pour enlever un joint en caoutchouc de presse-étoupe (R) d'une valve (V) d'une bouteille de gaz,
au moins une tête (4) qui effectue le retrait du joint en caoutchouc (R) par liaison avec le groupe d'actionnement (3),
au moins un groupe de verrouillage (5) qui est disposé sur la tête (4) et qui permet à la bouteille de gaz avec la valve (V) dont le joint en caoutchouc de presse-étoupe (R) doit être enlevé de rester fixe au cours du processus,
au moins un groupe de préhension de joint en caoutchouc (6) qui permet de prendre le joint en caoutchouc de presse-étoupe (R) sur la valve (V),
au moins un organe de retrait de joint en caoutchouc (7) qui permet d'enlever le joint en caoutchouc de presse-étoupe (R) pris par le groupe de préhension de joint en caoutchouc (6) de la valve (V), et
au moins une unité de commande qui régule le fonctionnement du groupe d'actionnement (3) d'une manière contrôlée, **caractérisée en ce que** le corps (2) comprend :
- au moins un porte-tête (8) sur lequel la tête (4) est disposée,
- au moins une bride de couplage inférieure (9) qui est située sur la surface supérieure du porte-tête (8) et qui permet au groupe d'actionnement (3) d'entrer en contact avec la tête (4),
- au moins une bride de couplage supérieure de groupe d'actionnement (10) qui fait en sorte que la partie du groupe d'actionnement (3) où il n'y a pas de tête (4) reste également fixe, et
- au moins un organe de liaison (11) qui permet à la bride de couplage inférieure (9) et à la bride de couplage supérieure (10) de se lier entre elles et de se tenir fermement et fixement,
**en ce que** le groupe d'actionnement (3) comprend :
- au moins un premier rouleau (12) qui est placé sur la bride de couplage supérieure (10), qui peut se déplacer vers le haut et vers le bas le long de l'axe de la bouteille de gaz et qui, sous l'effet de ce déplacement, permet à la tête (4) de se mettre en prise avec la valve (V) sur la bouteille de gaz ou de se séparer de la valve (V),
- au moins un deuxième rouleau (13) qui est relié à la bride de couplage inférieure (9) et qui, en se déplaçant, permet au groupe de verrouillage de verrouiller ou de libérer la valve (V),
- au moins un troisième rouleau (14) qui est relié à la bride de couplage inférieure (9) et qui, en se déplaçant, permet au groupe de préhension de joint en caoutchouc (6) de prendre le joint en caoutchouc de presse-étoupe (R) situé sur la valve (V),
- au moins un quatrième rouleau (15) qui est relié à la bride de couplage inférieure (10) et qui, en se déplaçant, permet à l'organe de retrait de joint en caoutchouc (7) d'enlever le joint en caoutchouc de presse-étoupe (R) situé sur la valve (V),
**en ce que** la tête (4) est disposée sur le porte-tête (8) situé sur le corps (2) et comprend :
- au moins un siège de valve (17) qui permet de coupler la valve (V) à la tête (4) pour enlever le joint en caoutchouc de presse-étoupe (R) de la valve (V),
- au moins un logement de groupe de préhension de joint en caoutchouc (18) dans lequel est placé le groupe de préhension de joint en caoutchouc (8) qui permet de prendre le joint en caoutchouc de presse-étoupe (R) au cours du processus de retrait,
et **en ce que** le groupe de préhension de joint en caoutchouc (6) est placé dans le logement de groupe de préhension de joint en caoutchouc (18) situé sur la tête (4), et comprend :
- au moins deux mâchoires (22) qui sont reliées de manière à effectuer un mouvement rotationnel l'une par rapport à l'autre,
- au moins un ressort (23) placé entre les mâchoires (22),
- au moins une came (24) qui est déplacée par le troisième rouleau, qui peut entrer et sortir du point de liaison des mâchoires (22) de manière à permettre aux mâchoires (22) de se déplacer et de se rapprocher l'une de l'autre afin de permettre la compression du joint en caoutchouc de presse-étoupe (R) et de prendre le joint en caoutchouc de presse-étoupe (R) compressé pour qu'il ait une forme ovale creuse ou de s'écarter l'une de l'autre.

2. Machine de retrait de joint en caoutchouc (1) selon la revendication 1, **caractérisée en ce que** le groupe d'actionnement (3) comprend au moins un cinquième rouleau (16) qui est placé sur la bride de couplage supérieure (10), et qui empêche au joint en caoutchouc de presse-étoupe (R) enlevé de la valve (V) de rester à l'intérieur de la tête (4) et qui pousse ledit joint en caoutchouc (R) vers l'extérieur à partir de la tête (4).

3. Machine de retrait de joint en caoutchouc (1) selon l'une quelconque des revendications précédentes, **caractérisée en ce que** le groupe de verrouillage (5) comprend :
- au moins un verrou de verrouillage (19) qui exerce une pression sur la valve (V) afin de fixer la valve (V) qui est placée dans le siège de valve (17),
- au moins un arbre de poussée (20) qui, en fonction du déplacement du deuxième rouleau (13), fait passer le verrou de verrouillage (19) de la position à laquelle il n'exerce pas de pression sur la valve (V) à la position à laquelle il exerce une pression sur la valve (V),
- au moins un ressort (21) qui permet au verrou de verrouillage (19), se trouvant à la position à laquelle il exerce une pression sur la valve (V), de revenir à la position à laquelle il n'exerce pas de pression sur la valve (V) à l'annulation de la force agissant sur l'arbre de poussée (20).

4. Machine de retrait de joint en caoutchouc (1) selon la revendication 3, **caractérisée en ce que** le verrou de verrouillage (19) comprend au moins deux parties se trouvant à une position à laquelle elles sont inclinées l'une par rapport à l'autre.

5. Machine de retrait de joint en caoutchouc (1) selon la revendication 1, **caractérisée en ce que** la came (24) est de forme conique.

6. Machine de retrait de joint en caoutchouc (1) selon l'une quelconque des revendications 1 à 4, **caractérisée en ce que** le groupe de préhension de joint en caoutchouc (6) se présente sous la forme d'une plaque (26) comprenant au moins un canal (25) n'ayant pas de diamètre fixe.

7. Machine de retrait de joint en caoutchouc (1) selon la revendication 6, **caractérisée en ce que** le canal (25) comprend une section avec un grand diamètre sur laquelle le joint en caoutchouc (R) est disposé et une section avec un petit diamètre permettant à la forme du joint en caoutchouc de devenir ovale sous l'effet du mouvement fourni à la plaque (26).

8. Machine de retrait de joint en caoutchouc (1) selon l'une quelconque des revendications 1 à 7, **caractérisée en ce que** l'unité de commande se trouve dans une structure de manière à permettre à la tête (4) de se déplacer vers le bas le long de l'axe de la bouteille de gaz et de s'asseoir sur la valve (V) au début du fonctionnement du premier rouleau (12).

9. Machine de retrait de joint en caoutchouc (1) selon la revendication 8, **caractérisée en ce que** l'unité de commande se trouve dans une structure de manière à activer le deuxième rouleau (13) en permettant de ce fait à l'arbre de poussée (20) de se déplacer vers le bas après que la tête (4) s'est assise sur la valve (V).

10. Machine de retrait de joint en caoutchouc (1) selon la revendication 9, **caractérisée en ce que** l'arbre de poussée (20) se trouve dans une structure de manière à faire tourner le verrou de verrouillage (19) à un angle prédéterminé, en permettant de ce fait à la valve (V) d'être verrouillée et ainsi de rester fixe pendant tout le processus lors du déplacement vers le bas.

11. Machine de retrait de joint en caoutchouc (1) selon la revendication 10, **caractérisée en ce que** l'unité de commande se trouve dans une structure de manière à activer le troisième rouleau (14) et permet au troisième rouleau (14) et à la came (24) de se déplacer vers le bas le long de l'axe de la tête (4) après que la valve (V) est fixée.

12. Machine de retrait de joint en caoutchouc (1) selon la revendication 11, **caractérisée en ce que** la came (24) se trouve dans une structure de manière à permettre aux mâchoires (22) de se déplacer également et au joint en caoutchouc de presse-étoupe (R) d'être compressé et de prendre une forme ovale creuse lors du déplacement de celles-ci.

13. Machine de retrait de joint en caoutchouc (1) selon la revendication 12, **caractérisée en ce que** l'unité de commande se trouve dans une structure de manière à activer le quatrième rouleau (15) et permet au quatrième rouleau (15) d'exercer une pression sur l'organe de retrait de joint en caoutchouc (7) après que le joint en caoutchouc de presse-étoupe (R) a pris une forme ovale.

14. Machine de retrait de joint en caoutchouc (1) selon la revendication 13, **caractérisée en ce que** l'organe de retrait de joint en caoutchouc (7) se trouve dans une structure de manière à se déplacer vers le bas le long de l'axe de la tête (4) et à entrer dans la partie creuse fournie dans la forme ovale prise par le joint en caoutchouc de presse-étoupe (R).

15. Machine de retrait de joint en caoutchouc (1) selon la revendication 14, **caractérisée en ce que** l'unité de commande se trouve dans une structure de manière à déplacer le deuxième rouleau (13) vers le haut après que l'organe de retrait de joint en caoutchouc (7) est entré dans la partie creuse sur le joint en caoutchouc de presse-étoupe (R) qui a pris une forme ovale.

16. Machine de retrait de joint en caoutchouc (1) selon la revendication 15, **caractérisée en ce que** le deuxième rouleau (13) se trouve dans une structure de manière à annuler la force agissant sur l'arbre de poussée (20), et au moyen du ressort (21), permettre à l'arbre de poussée (20) de monter à partir du verrou de verrouillage (19) lors du mouvement vers le haut de celui-ci.

17. Machine de retrait de joint en caoutchouc (1) selon la revendication 16, **caractérisée en ce que** le verrou de verrouillage (19) se trouve dans une structure de manière à effectuer un mouvement rotationnel à un taux prédéterminé, en retournant de ce fait à sa position à laquelle il ne compresse pas la valve (V) après avoir été libéré de la force exercée par l'arbre de poussée (20).

18. Machine de retrait de joint en caoutchouc (1) selon la revendication 17, **caractérisée en ce que** l'unité de commande se trouve dans une structure de manière à déplacer le troisième rouleau (14) vers le haut après que le verrou de verrouillage (19) est revenu à sa position à laquelle il ne compresse pas la valve.

19. Machine de retrait de joint en caoutchouc (1) selon la revendication 18, **caractérisée en ce que** le troisième rouleau (14) se trouve dans une structure de manière à permettre à la came (24), sur laquelle la force agissant cesse d'exister lors du déplacement vers le haut de celui-ci, de se déplacer vers le haut également.

20. Machine de retrait de joint en caoutchouc (1) selon la revendication 19, **caractérisée en ce que** la came (24) se trouve dans une structure de manière à permettre aux mâchoires (22) d'être libérées et d'essayer de revenir à leur position initiale sous l'effet de la force du ressort (23) lors du mouvement vers le haut de celle-ci.

21. Machine de retrait de joint en caoutchouc (1) selon la revendication 20, **caractérisée en ce que** l'unité de commande se trouve dans une structure de manière à déplacer le premier rouleau (12) vers le haut en permettant de ce fait à la tête (4) de monter également et au joint en caoutchouc de presse-étoupe (R) de se séparer de la valve (V) après que les mâchoires (22) sont revenues à leur position initiale.

22. Machine de retrait de joint en caoutchouc (1) selon la revendication 21, **caractérisée en ce que** l'unité de commande se trouve dans une structure de manière à activer le quatrième rouleau (15) en permettant de ce fait au quatrième rouleau (15) de monter et ainsi à l'organe de retrait de joint en caoutchouc (7) de monter également et au joint en caoutchouc de presse-étoupe (R) d'être libéré lors de la montée de la tête (4).

23. Machine de retrait de joint en caoutchouc (1) selon la revendication 22, **caractérisée en ce que** l'unité de commande se trouve dans une structure de manière à activer le cinquième rouleau (16) et permettre au joint en caoutchouc (R) d'être projeté hors de la tête (4) lorsque le cinquième rouleau (16) pousse le joint en caoutchouc de presse-étoupe (R) qui est séparé de la valve (V) afin d'empêcher des cas dans lesquels le joint en caoutchouc de presse-étoupe (R) qui arrive au niveau de l'axe de la tête (4) ne tombe pas à l'extérieur de la partie intérieure de la tête (4).
